# FASCICULE DE BREVET EUROPEEN

(11) **EP 0 996 300 B1**
(45) Date de publication et mention de la délivrance du brevet: **12.12.2007**
(21) Numéro de dépôt: 99460062.5
(22) Date de dépôt: 19.10.1999
(51) Int. Cl.: H04Q 7/22

(54) **Procédé d'accès à un serveur de services à partir d'une station mobile, module d'identification d'abonné et terminal correspondants**
Verfahren zum mobilstationseitigen Zugriff auf von einem Server gelieferte Dienste und zugehöriges Teilnehmeridentitätsmodul und Endgerät
Method for accessing server services from a mobile station subscriber identity module and terminal for carrying out the method

(30) Priorité: 22.10.1998 FR 9813455; 04.11.1998 FR 9814044
(43) Date de publication de la demande: 26.04.2000
(73) Titulaire: Société Française du Radiotéléphone-SFR, 75008 Paris (FR)
(72) Inventeur: Beaudou, Patrice, 92800 Puteaux (FR)
(74) Mandataire: Vidon, Patrice

(56) Documents cités:
- EP-A- 0 869 688
- WO-A-96/25828
- WO-A-97/04609
- WO-A-98/32301
- WO-A-98/42120
- WO-A-98/57474

## Description

Le domaine de l'invention est celui des systèmes de radiocommunication avec les mobiles.

Plus précisément, l'invention concerne l'accès à un serveur de services à partir d'une station mobile d'un système de radiocommunication.

La station mobile permettant la mise en oeuvre de la présente invention peut notamment, mais non exclusivement, être compris dans un système de radiocommunication de type GSM (pour "Global System for Mobile communications" en anglais), DCS 1800 (pour "Digital Cellular System 1800 MHz" en anglais), PCS 1900 (pour "Personal Communication System" en anglais), DECT (pour "Digital European Cordless Telecommunications") en anglais, ou encore UMTS (pour "Universal Mobile Telecommunication System" en anglais).

De façon classique, une station mobile comprend un terminal (ou ME, pour "Mobile Equipment" selon la terminologie GSM) coopérant avec un module d'identification d'abonné (ou SIM, pour "Subscriber Identity Module" selon la terminologie GSM, ou encore DAM, pour "DECT Authentication Mobile" selon la terminologie DECT). On notera que, selon les systèmes, la station mobile est parfois aussi appelée radiotéléphone mobile ou téléphone portable.

Par ailleurs, la présente invention s'applique à tout type de station mobile, et notamment que celle-ci émette et/ou reçoive de la voix et/ou des données. Dans le cas d'une émission/réception de données, le terminal peut être relié à un micro-ordinateur (portable de préférence), qui traite les données émises/reçues.

L'invention n'est pas limitée à l'accès à un type de serveur de services particulier. Elle s'applique donc notamment aux deux types de serveur de services, connus en eux-mêmes, dont on rappelle ci-dessous brièvement les caractéristiques.

Un premier type de serveur de services offre au moins un service d'accès à un réseau informatique de type Internet. Ce premier type de serveur de services, généralement appelé "plate-forme d'accès", permet à l'utilisateur de naviguer au sein du réseau informatique de type Internet, c'est-à-dire d'accéder à d'autres serveurs présents sur ce réseau informatique de type Internet. Ces autres serveurs, généralement appelés "serveurs Internet", supportent des "sites Web" et offrent chacun au moins un service de paiement (gestion d'un compte bancaire, transactions, ...) et/ou de réservation (billets de train, d'avion, de spectacles, ...) et/ou de consultation (météo, horaires,...).

Un second type de serveur de services offre au moins un service de paiement et/ou de réservation et/ou de consultation. Ce second type de serveur de services présente une offre de services de même nature que les serveurs Internet précités, mais se distingue de ces derniers en ce qu'il est accessible directement et non pas via une plate-forme d'accès. En d'autres termes, le second type de serveur de services n'est pas un serveur Internet, et n'est donc pas accessible à travers le réseau informatique de type Internet.

Dans la présente description, par réseau informatique de type Internet, on entend non seulement le réseau mondial baptisé "Internet" (qui est un réseau interconnectant de très nombreuses machines et actuellement en très forte expansion), mais également tout type de réseau informatique et/ou de télécommunication mettant en oeuvre la technologie internet. On rappelle en effet que le réseau Internet (le réseau mondial), n'est pas le seul type de réseau de télécommunication mettant en oeuvre la technologie internet. Notamment, une organisation peut parfaitement déployer son propre réseau, généralement appelé "réseau Intranet", sur la base de la technologie internet, sans pour autant être connectée au réseau Internet (le réseau mondial). Bien sûr, si cette organisation souhaite ensuite s'y connecter, la tâche lui sera facilitée puisqu'elle utilise la même technologie. La technologie internet, aussi appelée technologie TCP/IP, est basée sur l'utilisation des protocoles TCP/IP qui se définissent comme une suite de protocoles visant non seulement à interconnecter des calculateurs reliés par un même réseau physique, mais aussi à interconnecter ces différents réseaux physiques entre eux de manière à constituer un réseau logique unique.

De façon connue, après qu'il a établi une communication avec un serveur de services, le terminal d'une station mobile exécute une application spécifique lui permettant de bénéficier du(des) service(s) offert(s) par ce serveur de services. Dans la suite de la description, cette application spécifique, exécutée par le terminal, est appelée "application de services".

Document WO 97/04609 A divulgue un procédé d'accès à un serveur de services de paiement à partir d'une station mobile comprise dans un système de radiocommunication. La station mobile comprend un terminal coopérant avec un module d'identification d'abonné. Le terminal peut exécuter une application de services de façon à bénéficier des services de paiement offerts par le serveur de services après qu'une communication a été établie entre le terminal et le serveur de services.

Le mécanisme de lancement de cette application spécifique par le terminal présente plusieurs inconvénients. Ces inconvénients sont présentés ci-dessous dans le cas du premier type de serveur de services précité (et appelé "plate-forme d'accès"). Il est clair cependant que ces inconvénients existent également dans le cas du second type de serveur de services précité.

Ainsi, il est déjà possible aujourd'hui, avec certaines stations mobiles, d'accéder à un réseau informatique de type Internet. Pour cela, le terminal doit comprendre une touche spécifique ("touche d'accès Internet") et l' application de services spécifique est dans ce cas appelée "navigateur" (ou "browser" en anglais). Le navigateur, qui utilise un langage spécifique, permet au terminal de naviguer au sein du réseau informatique de type Internet, dès lors qu'une communication a été établie entre le terminal et une plateforme d'accès au réseau informatique de type Internet.

Avec ce type de terminal, la procédure d'accès, par exemple au réseau mondial Internet, est la suivante : après que l'utilisateur a appuyé sur la "touche d'accès Internet", le terminal tente d'établir une communication avec une plateforme d'accès ; si cette communication est effectivement établie, le terminal lance le navigateur, de façon que le terminal puisse naviguer au sein du réseau Internet.

Il apparaît cependant que cette solution actuelle n'est pas satisfaisante, du fait que, dans la station mobile, seul le terminal est impliqué (c'est lui qui est pourvu de la "touche d'accès Internet", qui tente d'établir la communication avec la plateforme d'accès, et qui lance le navigateur).

Ceci entraîne en effet que l'utilisateur n'est pas entièrement libre dans le choix de son terminal puiqu'il doit impérativement choisir un terminal pourvu de la "touche d'accès Internet".

Ceci entraîne en outre que, quel que soit l'opérateur auprès duquel il s'est abonné, l'utilisateur se voit contraint d'accéder au réseau informatique de type Internet selon des choix techniques effectués par le constructeur de son terminal. Notamment, l'utilisateur ne choisit pas le numéro de la plateforme d'accès, ni les informations utiles au navigateur après qu'il a été lancé, telles que par exemple des numéros de type IP (pour "Internet Protocol" en anglais), des clés secrètes d'authentification du navigateur et/ou de cryptage de données, des numéros de centre de service de messages courts (ou "SMS Center" en anglais), ....

L'invention a notamment pour objectif de pallier ces différents inconvénients de l'état de la technique.

Plus précisément, l'un des objectifs de la présente invention est de fournir un procédé permettant à un utilisateur d'accéder à un serveur de services à partir d'une station mobile quelconque (en ce sens que cette dernière n'est pas nécessairement pourvue d'une "touche d'accès Internet" telle que précitée).

L'invention a également pour objectif d'offrir une fonctionnalité supplémentaire (à savoir l'accès à un serveur de services) au sein d'une "application opérateur" (ou "application SIM", ou encore "menu opérateur") stockée par le module d'identification d'abonné et exécutée par celui-ci.

On sait en effet que, via le module d'identification d'abonné qu'ils distribuent et qui leur sont spécifiques, les différents opérateurs proposent à leurs abonnés des "menus opérateur" distincts. Chaque opérateur tente bien sûr d'incorporer un maximum de fonctionnalités au sein de son menu opérateur, et pour cela cherche à élaborer de nouvelles fonctionnalités. A la connaissance de l'inventeur, aucun des "menus opérateur" existants n'offre la fonctionnalité "accès à un serveur de services" (tel que par exemple "accès Internet"), qui fait précisément l'objet de la présente invention.

Un autre objectif de l'invention est de fournir un tel procédé permettant à l'utilisateur d'accéder au serveur de services selon des choix techniques effectués par son opérateur (et non pas par le constructeur de son terminal).

Un objectif complémentaire de l'invention est de fournir un tel procédé qui soit simple à mettre en oeuvre et peu coûteux.

Ces différents objectifs, ainsi que d'autres qui apparaîtront par la suite, sont atteints selon l'invention à l'aide d'un procédé d'accès à un serveur de services à partir d'une station mobile comprise dans un système de radiocommunication, ladite station mobile comprenant un terminal coopérant avec un module d'identification d'abonné, ledit terminal pouvant exécuter une application de services de façon à bénéficier du(des) service(s) offert(s) par ledit serveur de services après qu'une communication a été établie entre ledit terminal et ledit serveur de services,
ledit procédé comprenant les étapes suivantes :
- le module d'identification d'abonné envoie au terminal, afin que le terminal l'exécute, une commande d'établissement d'une communication entre le terminal et un premier serveur de services, ladite commande étant paramétrée avec un premier jeu de paramètre(s) comprenant un premier numéro de téléphone dudit premier serveur de services et, éventuellement, au moins un premier paramètre d'appel ;
- le terminal compare ledit premier jeu de paramètre(s) avec une liste prédéterminée de jeu(x) de paramètre(s), comprenant au moins un jeu de paramètre(s) ;
- si ledit premier jeu de paramètre(s) fait partie de ladite liste, le terminal exécute ladite commande et tente d'établir une communication avec ledit premier serveur de services, selon ledit premier jeu de paramètre(s) ;
- si ladite communication avec ledit premier serveur est effectivement établie, le terminal lance l'exécution de ladite application de services, de façon que ledit terminal puisse bénéficier du(des) service(s) offert(s) par ledit premier serveur de services.

C'est donc le module d'identification d'abonné (et non pas le terminal) qui "lance" la procédure d'accès au serveur de services, grâce à l'envoi par ce module d'identification d'abonné de la commande demandant au terminal d'établir une communication avec le premier serveur de services. Par conséquent, pour pouvoir être mis en oeuvre, le procédé de l'invention n'impose nullement que le terminal soit pourvu d'une "touche d'accès à un serveur de services". On rappelle qu'au contraire, avec la solution connue précitée, le terminal doit impérativement être pourvu d'une telle touche, puisque dans ce cas, c'est le terminal qui "lance" la procédure d'accès.

Il est clair que l'invention ne vise pas à protéger une commande permettant au module d'identification d'abonné de demander au terminal d'établir une communication. Une telle commande est en effet déjà est connue en soi. En revanche, la présente invention vise à protéger le concept général d'utiliser une telle commande pour "lancer" à partir d'un module d'identification d'abonné une procédure d'accès à un serveur de services. Pour cela, la commande est paramétrée avec le numéro de téléphone d'un serveur de services et, éventuellement, avec un ou plusieurs paramètres d'appel. Ceci n'avait jamais été envisagé auparavant. En effet, les préjugés de l'homme du métier l'ont toujours incité à penser que c'est le terminal qui doit "lancer" l'accès Internet, du fait que l'application de services se trouve sur le terminal et est exécutée par celui-ci.

En combinaison avec cette commande "de lancement", l'invention prévoit un mécanisme permettant au terminal de savoir quand il doit "prendre la main" et lancer son application de services. Ce mécanisme consiste pour le terminal à vérifier, d'une part (par comparaison), que le numéro de téléphone en paramètre de la commande est bien un numéro de serveur de services et, d'autre part, que la communication avec le serveur de services est bien établie.

Dès lors qu'il a lancé son application de services, le terminal peut communiquer avec le serveur de services et bénéficier du ou des services offerts par ce dernier, selon un fonctionnement tout à fait classique qui ne sera donc pas décrit ici plus en détail.

Préférentiellement, chaque jeu de paramètre(s) distinct permettant de paramétrer ladite commande d'établissement d'une communication comprend au moins :
- un numéro de téléphone d'un serveur de services ;
- un paramètre d'appel définissant un mode de communication.

Dans un premier mode de réalisation préférentiel de l'invention, ledit serveur de services, dit plate-forme d'accès, offre au moins un service d'accès à un réseau informatique de type Internet,
ladite application de services exécutée par le terminal étant un navigateur permettant au terminal de naviguer au sein dudit réseau informatique de type Internet, après que ladite communication entre le terminal et ladite plate-forme d'accès a effectivement été établie.

Ainsi, la présente invention s'applique au premier type de serveur de services précité, généralement appelé "plate-forme d'accès".

Avantageusement, ledit navigateur utilise un langage spécifique du type "WAP/HDML".

Préférentiellement, au moins une information, utile au navigateur après qu'il a été lancé, est également stockée sur ledit module d'identification d'abonné.

De cette façon, l'utilisateur accède au réseau informatique de type Internet selon des choix techniques effectués par son opérateur (et non pas par le constructeur de son terminal). En d'autres termes, la façon dont l'utilisateur accède au réseau informatique de type Internet n'est plus (ou presque plus) dépendante du terminal avec lequel coopère son module d'identification d'abonné.

De façon avantageuse, ladite au moins une information, utile au navigateur après qu'il a été lancé, appartient au groupe comprenant : des numéros de type IP, des clés secrètes d'authentification du navigateur et/ou de cryptage de données, des identificateurs d'utilisateurs auprès des plateformes d'accès et des numéros de centre de service de messages courts.

On a par exemple deux numéros de type IP, qui sont les "adresses internet" de machines dont l'utilisation est réservée à l'opérateur (l'une des deux machines étant une machine de secours).

Dans un second mode de réalisation préférentiel de l'invention, ledit serveur de services offre au moins un service de paiement et/ou de réservation et/ou de consultation.
ladite application de services exécutée par le terminal étant une application de paiement et/ou de réservation et/ou de consultation, permettant au terminal de bénéficier dudit au moins un service de paiement et/ou de réservation et/ou de consultation (par exemple de serveurs) offert par ledit serveur de services, après que ladite communication entre le terminal et ledit serveur de services a effectivement été établie.

Ainsi, la présente invention s'applique au second type de serveur de services précité.

De façon avantageuse, ledit module d'identification d'abonné stockant au moins une "application opérateur" dont l'exécution permet d'offrir au moins une fonctionnalité à un utilisateur de ladite station mobile,
ladite étape d'envoi par le module d'identification d'abonné, au terminal, d'une commande d'établissement d'une communication entre le terminal et le premier serveur de services correspondant à une fonctionnalité supplémentaire, dont le choix est offert à l'utilisateur lors de l'exécution par le module d'identification d'abonné de ladite application opérateur.

En d'autres termes, grâce au procédé selon l'invention, le "menu opérateur" peut offrir la fonctionnalité "accès à un serveur de services". On rappelle que jusqu'ici, cette fonctionnalité était accessible uniquement par une "touche d'accès à un serveur de services" dont devait être pourvu le terminal.

Préférentiellement, ledit système de radiocommunication auquel appartient ladite station mobile appartient au groupe comprenant : les systèmes de radiocommunication de type GSM, les systèmes de radiocommunication de type DCS 1800, les systèmes de radiocommunication de type PCS 1900, les systèmes de radiocommunication de type UMTS et les systèmes de radiocommunication de type DECT. Il est clair que cette liste n'est nullement exhaustive.

Dans un mode de réalisation avantageux de l'invention, ladite commande d'établissement d'une communication, envoyée par le module d'identification d'abonné au terminal, est la commande "SET UP CALL" du jeu de commandes du "SIM Application Toolkit".

Pour plus de précisions concernant cette commande "SET UP CALL", on pourra se reporter à la norme "GSM 11.14 (Phase 2+)" de l'ETSI.

De façon préférentielle, ladite liste prédéterminée de jeu de paramètre(s) est stockée sur ledit module d'identification d'abonné, chaque jeu de paramètre(s) comprenant un numéro de téléphone de serveur de services et, éventuellement, au moins un paramètre d'appel,
et en ce que ledit procédé comprend en outre l'étape suivante, préalable à ladite étape de comparaison :
- le terminal lit ladite liste prédéterminée de jeu de paramètre(s), stockée sur ledit module d'identification d'abonné.

De cette façon, l'utilisateur accède à un serveur de services (plate-forme d'accès ou autre) choisi par son opérateur (et non pas par le constructeur de son terminal). En outre, la liste de numéros de serveur de services peut être modifiée ou complétée à volonté par l'opérateur. En effet, on sait aujourd'hui parfaitement modifier à distance le contenu d'un module d'identification, par téléchargement de données (et ce de façon généralement transparente pour l'utilisateur).

Avantageusement, ladite étape de lecture, par le terminal, de ladite liste prédéterminée de jeu de paramètre(s) est exécutée lors d'au moins certaine(s) initialisation(s) dudit terminal.

Dans un mode de réalisation particulier de l'invention, si les conditions pour que le terminal lance l'exécution de ladite application de services ne sont pas remplies, ledit procédé comprend en outre les étapes complémentaires suivantes, pouvant éventuellement être réitérées :
- le module d'identification d'abonné envoie au terminal, afin que le terminal l'exécute, une nouvelle commande d'établissement d'une communication entre le terminal et ledit premier serveur de services ou entre le terminal et un second serveur de services, distinct du premier serveur de services, ladite nouvelle commande étant paramétrée avec un nouveau jeu de paramètre(s) distinct dudit premier jeu de paramètre(s) ;
- le terminal compare ledit nouveau jeu de paramètre(s) avec ladite liste prédéterminée de jeu(x) de paramètre(s) ;
- si le résultat de ladite comparaison est positif, le terminal exécute ladite commande et tente d'établir une communication avec ledit premier ou second serveur de services, selon ledit nouveau jeu de paramètre(s) ;
- si ladite communication avec ledit premier ou second serveur de services est effectivement établie, le terminal lance l'exécution de ladite application de services, de façon que ledit terminal puisse bénéficier du(des) service(s) offert(s) par ledit premier ou second serveur de services.

Ainsi, plusieurs tentatives d'accès peuvent être effectuées successivement, avec des numéros de serveur de services distincts. On notera que chaque nouvelle tentative peut être effectuée :
- soit avec le même serveur de services, mais en utilisant un nouveau jeu de paramètre. On suppose dans ce cas qu'un même serveur de services peut être appelé de différentes façons, c'est-à-dire avec différents jeux de paramètres. Deux jeux de paramètres sont différents s'ils comprennent des numéros de téléphone distincts et/ou des paramètre d'appel distincts (un paramètre d'appel distinct est par exemple le mode de transmission : dans l'un des jeux de paramètres il peut s'agir d'un mode numérique et dans l'autre d'un mode analogique) ;
- soit avec un autre serveur de services.

Avantageusement, ladite étape d'envoi par le module d'identification d'abonné, au terminal, d'une nouvelle commande d'établissement d'une communication est effectuée automatiquement si, à l'issue d'une tentative précédente, les conditions pour que le terminal lance l'exécution de ladite application de services ne sont pas remplies.

Dans ce cas, l'utilisateur n'a pas à agir puisque chaque nouvelle tentative d'accès est effectuée automatiquement par le module d'identification d'abonné.

Selon une variante avantageuse, ladite étape d'envoi par le module d'identification d'abonné, au terminal, d'une nouvelle commande d'établissement d'une communication correspond à une fonctionnalité supplémentaire, dont le choix est offert à l'utilisateur lors de l'exécution par le module d'identification d'abonné de ladite application opérateur.

En d'autres termes, l'utilisateur peut décider, pour chaque tentative d'accès (et y compris pour la première tentative), à quel serveur de services il souhaite accéder et/ou avec quel jeu de paramètre il désire que cette tentative d'accès soit effectuée.

Préférentiellement, ladite étape de lancement par le terminal de l'exécution de ladite application de services est suivie d'une étape d'authentification dudit module d'identification d'abonné par ledit serveur de services, comprenant elle-même les étapes suivantes :
- le serveur de services envoie un nombre aléatoire, dit challenge, au module d'identification d'abonné, via le terminal ;
- en fonction dudit challenge et à l'aide d'un algorithme d'authentification et/ou au moins une clé d'authentification contenu(s) dans des zones protégées du module d'identification d'abonné, le module d'identification d'abonné calcule une première signature électronique ;
- via le terminal, le module d'identification d'abonné envoie ladite première signature électronique au serveur de services ;
- en fonction dudit challenge et à l'aide dudit algorithme d'authentification et/ou de ladite au moins une clé d'authentification, qu'il connaît également, ledit serveur de services calcule une seconde signature électronique ;
- ledit serveur de services compare lesdites première et seconde signatures électroniques, et si elles sont identiques, authentifie ledit module d'identification d'abonné.

Cette étape d'authentification peut être qualifiée de dynamique du fait que c'est le module d'identification d'abonné, et non pas le terminal, qui calcule la signature électronique. Il est important de noter que, de cette façon, c'est le module d'identification d'abonné qui est authentifié par le serveur de services, et non pas le terminal. En outre, cette solution offre une bonne sécurité car, d'une part, la signature électronique varie lors de chaque nouvelle authentification et, d'autre part, l'algorithme d'authentification et/ou la clé d'authentification ne sont pas lisibles par un tiers en possession du module d'identification d'abonné (même sur l'interface entre le module d'identification d'abonné et le terminal). Enfin, cette étape d'authentification peut suivre immédiatement ou non l'étape de lancement par le terminal de l'exécution de l'application de services.

L'invention concerne également un Module d'identification d'abonné, du type destiné à coopérer avec un terminal pour former une station mobile comprise dans un système de radiocommunication, ledit terminal pouvant exécuter une application de services de façon à bénéficier du(des) service(s) offert(s) par un serveur de services après qu'une communication a été établie entre ledit terminal et ledit serveur de services,
ledit module d'identification d'abonné comprenant des moyens d'envoi au terminal, afin que le terminal l'exécute, d'une commande d'établissement d'une communication entre le terminal et un premier serveur de services, ladite commande étant paramétrée avec un premier jeu de paramètre(s) comprenant un premier numéro de téléphone dudit premier serveur de services et, éventuellement, au moins un premier paramètre d'appel, le terminal effectuant les étapes suivantes à la réception de ladite commande :
- le terminal compare ledit premier jeu de paramètre(s) avec une liste prédéterminée de jeu(x) de paramètre(s), comprenant au moins un jeu de paramètre(s) ;
- si ledit premier jeu de paramètre(s) fait partie de ladite liste, le terminal exécute ladite commande et tente d'établir une communication avec ledit premier serveur de services, selon ledit premier jeu de paramètre(s) ;
- si ladite communication avec ledit premier serveur est effectivement établie, le terminal lance l'exécution de ladite application de services, de façon que ledit terminal puisse bénéficier du(des) service(s) offert(s) par ledit premier serveur de services.

L'invention concerne aussi un terminal, du type destiné à coopérer avec un module d'identification d'abonné pour former une station mobile comprise dans un système de radiocommunication, ledit terminal pouvant exécuter une application de services de façon à bénéficier du(des) service(s) offert(s) par un serveur de services après qu'une communication a été établie entre ledit terminal et ledit serveur de services,
ledit terminal comprenant :
- des moyens de réception d'une commande, provenant du module d'identification d'abonné et demandant au terminal d'établir une communication entre le terminal et un premier serveur de services, ladite commande étant paramétrée avec un premier jeu de paramètre(s) comprenant un premier numéro de téléphone dudit premier serveur de services et, éventuellement, au moins un premier paramètre d'appel ;
- des moyens de comparaison dudit premier jeu de paramètre(s) avec une liste prédéterminée de jeu(x) de paramètre(s), comprenant au moins un jeu de paramètre(s) ;
- des moyens d'exécution de ladite commande, si ledit premier jeu de paramètre(s) fait partie de ladite liste, de façon à tenter d'établir une communication avec ledit premier serveur de services, selon ledit premier jeu de paramètre(s) ;
- des moyens de lancement de l'exécution de ladite application de services, si ladite communication entre le terminal et ledit premier serveur est effectivement établie, de façon que ledit terminal puisse bénéficier du(des) service(s) offert(s) par ledit premier serveur de services.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un schéma synoptique global permettant d'expliquer le principe général d'un accès à un serveur de services à partir d'une station mobile comprise dans un système de radiocommunication ;
- la figure 2 présente un organigramme simplifié d'un mode de réalisation particulier du procédé selon l'invention ;
- la figure 3 présente, de façon partielle, un exemple de contenu de la zone mémoire du module d'identification d'abonné apparaissant sur la figure 1 ;
- la figure 4 présente plus en détail un mode de réalisation particulier de l'étape d'authentification apparaissant sur la figure 2.

L'invention concerne donc un procédé d'accès à un serveur de services à partir d'une station mobile comprise dans un système de radiocommunication 1.

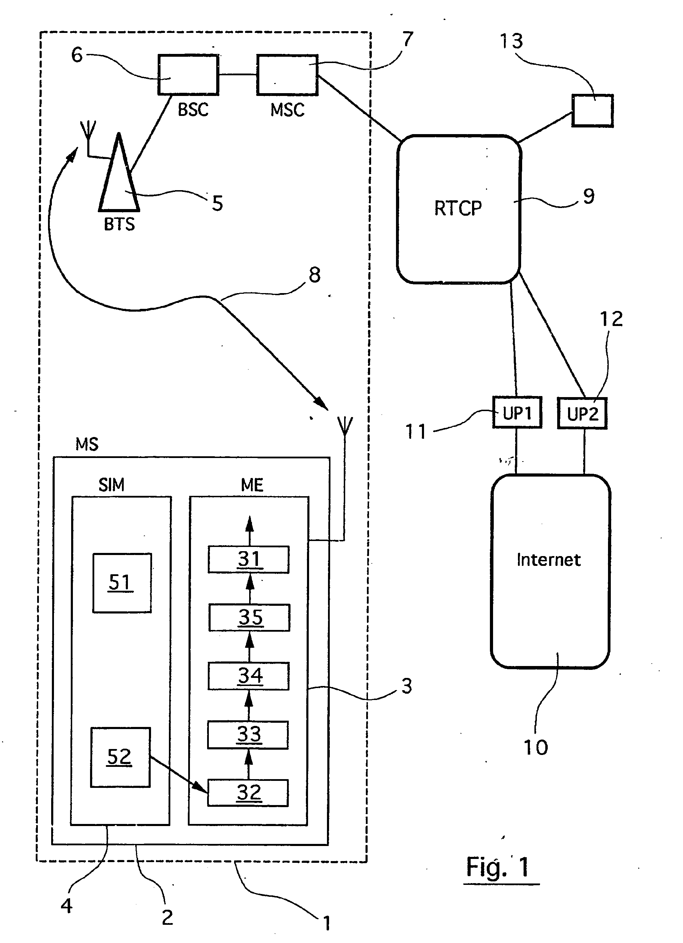

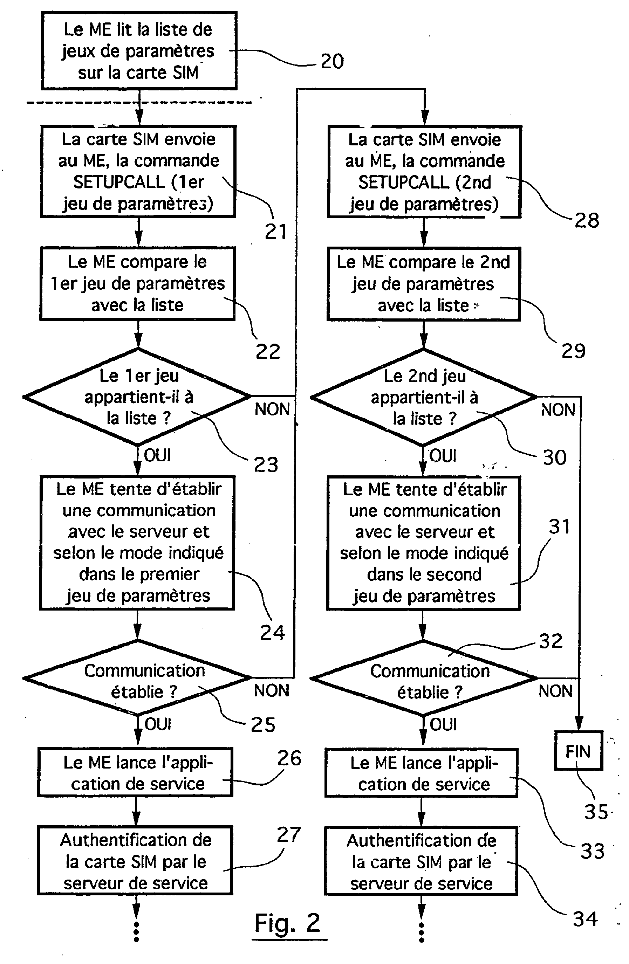

Avant de présenter en détail un mode de réalisation particulier du procédé selon l'invention (en relation avec l'organigramme de la figure 2), on rappelle le principe général d'un accès à un serveur de services à partir d'une station mobile 2 (en relation avec le schéma synoptique de la figure 1).

Dans la suite de la description, on considère le cas particulier d'un système de radiocommunication de type GSM. Il est clair cependant que la présente invention n'est pas limitée à ce type de système de radiocommunication.

On rappelle tout d'abord, en relation avec le schéma synoptique de la figure 1, la structure d'un système de radiocommunication 1 de type GSM. Une pluralité de stations mobiles 2 (ou MS, pour "Mobile Station", selon la terminologie GSM) évoluent au sein d'un réseau de cellules géographiques (non représentées). Chaque cellule correspond à la couverture radio d'une station de base 5 (ou BTS, pour "Base Transceiver Station", selon la terminologie GSM). La station mobile 2 communique, via l'interface air 8, avec la station de base 5 de la cellule où il se trouve. Les stations de base sont gérées par un contrôleur de stations de base 6 (ou BSC, pour "Base Station Controller", selon la terminologie GSM). Plusieurs contrôleur de stations de base 6 peuvent être pilotés par un central de commutation 7 (ou MSC, pour "Mobile Service Switching Center", selon la terminologie GSM), qui est l'élément maître d'un réseau GSM. Le central de commutation 7 est relié au réseau téléphonique commuté public 9 (RTCP). On notera que, par souci de simplification, un seul de chacun des types d'éléments 2, 5, 6 et 7 de la structure est représenté sur la figure 1.

La station mobile 2 comprend un terminal 3 (ou ME, pour "Mobile Equipment", selon la terminologie GSM) coopérant avec un module d'identification d'abonné 4 (ou SIM, pour "Subscriber Identity Module", selon la terminologie GSM). Pour plus de précisions sur le terminal 3 et le module d'identification d'abonné 4, on pourra se reporter aux normes "GSM 11.11 et GSM 11.14 (Phase 2+)" de l'ETSI.

D'une façon générale, et connue en soi, afin de pouvoir accéder à un serveur de services donné, le terminal doit pouvoir exécuter une application de services, spécifique à ce serveur de services donné et permettant au terminal de bénéficier du ou des services offerts par ce serveur de services donné.

A titre d'exemple, sur la figure 1, on suppose qu'il existe :
- deux plateformes d'accès 11 (UP1), 12 (UP2), qui sont deux serveurs de services particuliers offrant chacun un service d'accès à un réseau informatique de type Internet 10 ;
- un serveur 13 de paiement et/ou de réservation et/ou de consultation.

Dans la suite de la description, à titre d'exemple illustratif et non limitatif, on présente en détail uniquement le cas d'un accès à une plate-forme d'accès 11, 12. Il est clair cependant que le mécanisme d'accès décrit ci-après s'applique également au cas d'un accès à n'importe quel type de serveur de services, et notamment à un serveur offrant un ou plusieurs services de paiement et/ou de réservation et/ou de consultation.

Afin d'accéder à une plate-forme d'accès, et à travers celle-ci, à un réseau informatique de type Internet 10, l'application de services que le terminal 3 doit exécuter est un navigateur 31 ("browser"). On utilise par exemple le navigateur commercialisé par la société Unwired Planet, sous le nom de produit "UP.browser" (marque déposée).

De façon classique, le navigateur 31 utilise un langage spécifique et permet au terminal 3 de naviguer au sein du réseau informatique de type Internet (c'est-à-dire de se connecter à des "sites Web" afin de pouvoir échanger avec eux tous types d'informations). Préalablement à cette "navigation", le terminal 3 doit avoir établi une communication avec une plateforme d'accès à ce réseau informatique de type Internet 10. On rappelle que dans l'exemple présenté, deux plateformes d'accès 11 (UP1), 12 (UP2) sont disponibles. Il s'agit par exemple de plateformes du type commercialisé par la société Unwired Planet, sous le nom de produit "UP.link" (marque déposée).

Le langage spécifique utilisé par le navigateur 31 est par exemple le langage "WAP/HDML" (pour "Wireless Application Protocol / Handled Device Mark-up Language" en anglais). Pour plus de précisions concernant ce langage, et plus généralement les concepts WAP et HDML (marque déposée), on pourra se reporter aux documents suivants :
- concernant HDML (ces documents sont consultables sur l'URL : http://www.uplanet.com):
   * "HDML Specification" (spécification HDML), version 2.0, 11 avril 1997 ;
   * "UP.Link (marque déposée) administration guide", version 3.0, avril 1998 ;
- concernant WAP (ces documents sont consultables sur l'URL : http://www.wapforum.org/) :
   * "WAP Architecture Specification", WAP Forum, 30 avril 1998 ;
   * Wireless Transport Layer Security Specification", WAP Forum, 30 avril 1998 ;
   * WML Script Language Specification", WAP Forum, 9 avril 1998 ;
   * WAP Security Smart Card", draft version 0.1 (1998-06).

D'une façon générale, l'application de services (exécutée par le terminal) peut être écrite dans un langage quelconque, tel que par exemple le langage JAVA (marque déposée).

Selon la présente invention, et afin de permettre la mise en oeuvre du procédé décrit en détail par la suite (en relation avec la figure 2), le module d'identification d'abonné 4 et le terminal 3 comprennent des moyens spécifiques.

Ainsi, le module d'identification d'abonné 4 comprend des moyens 52 d'envoi au terminal d'une commande demandant au terminal d'établir une communication avec un serveur de services (par exemple une des plateformes d'accès 11, 12). Cette commande est par exemple paramétrée avec, d'une part, le (ou un parmi une pluralité) numéro de téléphone du serveur de services et, d'autre part, le mode de transmission (par exemple mode numérique ou mode analogique) selon lequel la communication doit établie.

Il est clair qu'un même serveur de services peut être accessible de différentes manières, correspondant chacune à un jeu de paramètre distinct. En effet, un même serveur de services peut posséder plusieurs numéros de téléphone, ou, sous un même numéro, accepter différents modes de transmission.

Par ailleurs, le terminal 3 comprend :
- des moyens 32 de réception de la commande précitée provenant du module d'identification d'abonné 4, cette commande étant paramétrée avec un jeu de paramètre donné ;
- des moyens 33 de comparaison du jeu de paramètre accompagnant la commande avec une liste prédéterminée de jeux de paramètre, de façon à déterminer si le jeu de paramètres accompagnant la commande appartient ou non à cette liste ;
- des moyens 34 d'établissement d'une communication d'une part avec le serveur dont le numéro de téléphone est précisé en paramètre de la commande, et d'autre part selon le mode de transmission précisé en paramètre de la commande ;
- des moyens 35 de lancement de l'application de services 31, si le résultat de la comparaison effectuée par les moyens 33 de comparaison est positif et si les moyens 34 d'établissement ont effectivement établi une communication avec le serveur de services.

En relation avec l'organigramme de la figure 2, on présente maintenant en détail un mode de réalisation particulier du procédé selon l'invention.

Comme expliqué en détail ci-dessous, selon l'invention, l'exécution du procédé d'accès est "lancée" par le module d'identification d'abonné (et non pas, comme dans l'art antérieur connu, par le terminal). Ce "lancement" de l'exécution du procédé d'accès est par exemple proposé à l'utilisateur de la station mobile sous la forme d'une fonctionnalité supplémentaire au sein du "menu opérateur". On rappelle que le "menu opérateur" est l'"application opérateur" (ou "application SIM") exécutée par le module d'identification d'abonné et à travers laquelle l'utilisateur se voit offrir une pluralité de fonctionnalités propres à son opérateur.

Dans ce mode de réalisation particulier, on suppose par ailleurs que le terminal 3 et le module d'identification d'abonné 4 sont du type pouvant mettre en oeuvre le "SIM Application Toolkit", tel que décrit en détail dans la norme GSM 11.14 (Phase 2+)" de l'ETSI. Le module d'identification d'abonné 4 est alors qualifié de "proactive SIM", selon la terminologie GSM. En résumé, le "SIM Application Toolkit" est un jeu de commandes et de procédures permettant au module d'identification d'abonné 4 de "prendre la main" et d'envoyer des commandes au terminal 3. Notamment, l'une de ces commandes, appelée "SET UP CALL (paramètre)", permet au module d'identification d'abonné 4 de demander au terminal 3 d'établir une communication en composant un numéro qu'il lui précise en paramètre et selon un mode de transmission qu'il lui précise également en paramètre.

On présente maintenant successivement chacune des étapes du mode de réalisation particulier du procédé selon l'invention, tel qu'illustré par l'organigramme de la figure 2.

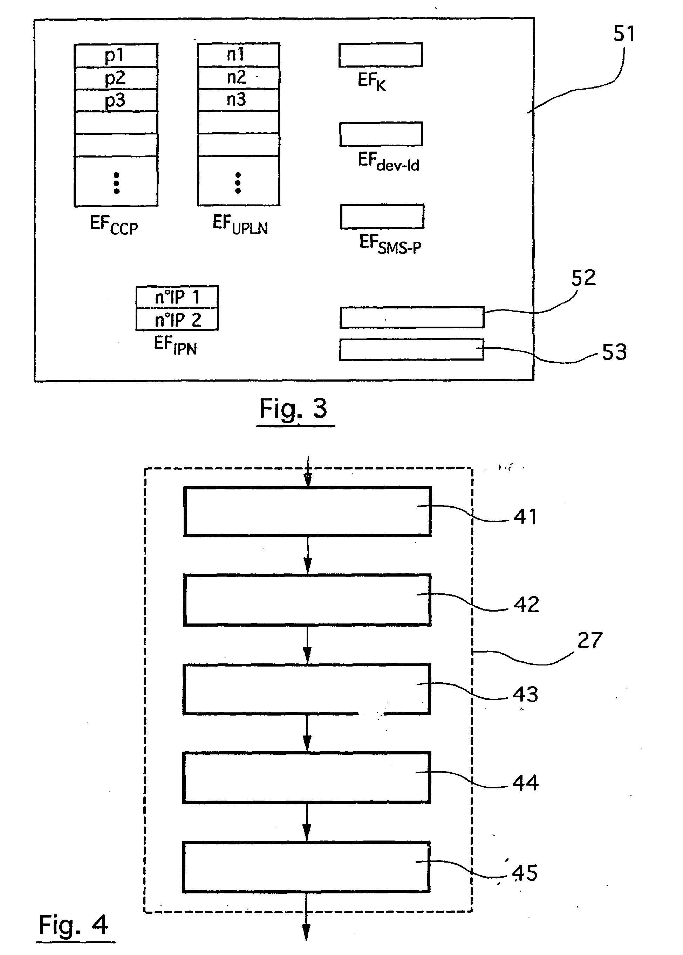

Etape 20 : par exemple lors de chacune (ou seulement certaines) de ses initialisations, le terminal 3 lit, dans une zone mémoire 51 du module d'identification d'abonné 4, une liste prédéterminée de jeux de paramètres, comprenant chacun un numéro de téléphone d'un serveur de services, un mode de transmission, et éventuellement d'autre(s) paramètre(s) d'appel. Un exemple de structure de la zone mémoire 51 est présenté en détail par la suite, en relation avec la figure 3.

Etape 21 : le module d'identification d'abonné 4 envoie au terminal 3 une commande "SET UP CALL (premier jeu de paramètres)", demandant au terminal 3 d'établir une communication selon les indications du premier jeu de paramètres. Il s'agit par exemple d'établir une communication avec la première plate-forme UP1, en mode numérique.

Etape 22 : le terminal 3 compare le premier jeu de paramètres, précisé en paramètre de la commande, avec une liste prédéterminée de un ou plusieurs jeu(x) de paramètres distinct(s).

Etape 23 : le terminal 3 détermine si la première condition suivante est vérifiée : "le premier jeu de paramètres appartient à la liste prédéterminée".

Etape 24 : si la première condition est vérifiée, le terminal 3 tente d'établir une communication selon les indications du premier jeu de paramètres.

Etape 25 : le terminal 3 détermine si la seconde condition suivante est vérifiée : la communication demandée est effectivement établie.

Etape 26 : si la seconde condition est vérifiée, le terminal 3 lance l'application de services 31 (dans l'exemple précité, le navigateur est lancé).

Etape 27 : le serveur de services (UP1 dans l'exemple précité) authentifie le module d'identification d'abonné 4.

Comme présenté sur l'organigramme simplifié de la figure 4, dans un mode de réalisation particulier, cette étape 27 d'authentification comprend elle-même les étapes suivantes :
- le serveur de services UP1 envoie (41) un nombre aléatoire, dit challenge, au module d'identification d'abonné 4, via le terminal 3 ;
- en fonction de ce challenge et à l'aide d'un algorithme d'authentification et/ou au moins une clé d'authentification contenu(s) dans des zones protégées 52, 53 du module d'identification d'abonné (par exemple au sein de la zone mémoire 51, cf fig. 3), le module d'identification d'abonné 4 calcule (42) une première signature électronique S1 ;
- via le terminal 3, le module d'identification d'abonné 4 envoie (43) la première signature électronique S1 au serveur de services UP1 ;
- en fonction du challenge et à l'aide de l'algorithme d'authentification et/ou de la clé d'authentification, qu'il connaît également, le serveur de services UP1 calcule (44) une seconde signature électronique S2 ;
- le serveur de services UP1 compare (45) les première et seconde signatures électroniques S1, S2, et si elles sont identiques, authentifie le module d'identification d'abonné 4 (et donc l'usager de cette carte SIM).

Etape 28 : si l'une des première et seconde conditions (cf étapes 23 et 25 respectivement) n'est pas vérifiée, le module d'identification d'abonné 4 envoie au terminal 3 une nouvelle commande "SET UP CALL (second jeu de paramètres)", demandant au terminal 3 d'établir une communication selon les indications du second jeu de paramètres. Il s'agit par exemple d'établir une communication avec la seconde plate-forme UP1, en mode analogique. Il est clair qu'il pourrait aussi s'agir d'établir une communication toujours avec la première plate-forme UP1, mais en mode analogique. On comprendra que de nombreuses solutions sont possibles, le nombre de ces solutions étant égal au nombre de jeux de paramètres distincts (chaque jeu comprenant un numéro de serveur de services, un mode de transmission, ...) pour le type de serveur de services auquel on souhaite accéder.

Etapes 29 à 34 : ces étapes se distinguent des étapes 22 à 27 uniquement en ce que le premier jeu de paramètres et le serveur de services UP1 sont remplacés par le second jeu de paramètres et le serveur de services UP2.

Etape 35 : si l'une des deux conditions examinées aux étapes 30 et 32, pendantes des étapes 23 et 25 respectivement, n'est pas vérifiée, la procédure d'accès est interrompue.

Il est clair que si la liste de jeux de paramètres comprend plus de deux jeux de paramètres, une variante de l'étape 35 peut consister à réitérer les étapes 28 à 32 précitées avec chacun des autres jeux de paramètres. Dans ce cas, la procédure d'accès n'est interrompue que si toutes les différentes tentatives, avec les différents jeux de paramètres de la liste, ont échoué.

On présente maintenant, en relation avec la figure 3, un exemple de contenu de la zone mémoire 51 du module d'identification d'abonné 4.

Comme expliqué précédemment (cf étape 20), cette zone mémoire 51 stocke les éléments constitutifs des jeux de paramètres permettant de paramétrer la commande "CALL SET UP". On rappelle que ces éléments constitutifs comprennent par exemple :
- la liste des numéros de serveurs de services (n1, n2, n3, ...). Dans le cas de plate-formes d'accès UP, ces numéros sont par exemple stockés dans un fichier élémentaire EF_{UPLN} (pour "Elementary File_{UP Link Number}" en anglais) ;
- la liste des paramètres d'appels (p1, p2, p3, ...) (par exemple les modes de transmission (mode numérique, mode analogique, ...) correspondant aux divers numéros de serveurs de services. Ces paramètres d'appels sont par exemple stockés dans un fichier élémentaire EF_{CCP} (pour "Elementary File_{Capability Configuration Parameters}" en anglais) de la zone mémoire 51. De même que les numéros de plateforme, ces paramètres sont destinés à être lus au préalable par le terminal (lors de l'étape 20).

Optionnellement, on peut prévoir que la zone mémoire 51 du module d'identification d'abonné 4 (et non pas le terminal 3) stocke également des informations utiles au navigateur 31 après qu'il a été lancé. Il peut s'agir, par exemple :
- de numéros de type IP, stockés dans un fichier élémentaire EF_{IPN} (pour "Elementary File_{Internet Protocol Number}" en anglais) ;
- d'une clé secrète d'authentification du navigateur et/ou de cryptage de données sur le réseau informatique de type Internet, stockée dans un fichier élémentaire EF_{K} (pour "Elementary File_{Key}" en anglais). Cette clé secrète est utilisée lors de chaque session entre le navigateur et une des plateformes d'accès ;
- d'un identificateur de l'utilisateur auprès de chaque plateforme d'accès, stocké dans un fichier élémentaire EF_{dev-Id} (pour "Elementary File_{device_Identifier}" en anglais) ;
- de numéros de centre de services de messages courts, stockés dans un fichier élémentaire EF_{SMS-P} (pour "Elementary File_{Short Message Service - Parameters}" en anglais) ;
- etc.

Il est clair que de nombreux autres modes de réalisation de l'invention peuvent être envisagés. On peut notamment prévoir un nombre quelconque de serveurs de services (plateforme d'accès ou serveur de paiement et/ou de réservation et/ou de consultation). On peut également prévoir de ne stocker, en zone mémoire 51 du module d'identification d'abonné 4, que certaines des informations listées ci-dessus. On notera également que l'ordre d'exécution des étapes 22 à 25 (ainsi que celui des étapes29 à 32) pourrait être modifié.

## Revendications

1. Procédé d'accès à un serveur de services (UP1, UP2, 13) à partir d'une station mobile (2) comprise dans un système de radiocommunication (1), ladite station mobile comprenant un terminal (3) coopérant avec un module d'identification d'abonné (4), ledit terminal pouvant exécuter une application de services de façon à bénéficier d'un ou plusieurs services offerts par ledit serveur de services après qu'une communication a été établie entre ledit terminal et ledit serveur de services,
**caractérisé en ce que** ledit procédé comprend les étapes suivantes :
- le module d'identification d'abonné envoie (21) au terminal, afin que le terminal l'exécute, une commande d'établissement d'une communication entre le terminal et un premier serveur de services (UP1), ladite commande étant paramétrée avec un premier jeu d'un ou plusieurs paramètres comprenant un premier numéro de téléphone dudit premier serveur de services et, éventuellement, au moins un premier paramètre d'appel ;
- le terminal compare (22) ledit premier jeu d'un ou plusieurs paramètres avec une liste prédéterminée jeux d'un ou plusieurs paramètres, comprenant au moins un jeu d'un ou plusieurs paramètres;
- si (23) ledit premier jeu d'un ou plusieurs paramètres fait partie de ladite liste, le terminal exécute ladite commande et tente (24) d'établir une communication avec ledit premier serveur de services, selon ledit premier jeu d'un ou plusieurs paramètres ;
- si (25) ladite communication avec ledit premier serveur est effectivement établie, le terminal lance (26) l'exécution de ladite application de services, de façon que ledit terminal puisse bénéficier d'un ou plusieurs services offerts par ledit premier serveur de services.

2. Procédé selon la revendication 1, **caractérisé en ce que** chaque jeu paramètres distinct permettant de paramétrer ladite commande d'établissement d'une communication comprend au moins :
- un numéro de téléphone (n1, n2, n3, ...) d'un serveur de services ;
- un paramètre d'appel (p1, p2, p3, ...) définissant un mode de communication.

3. Procédé selon l'une quelconque des revendications 1 et 2, **caractérisé en ce que** ledit serveur de services (UP1, UP2), dit plate-forme d'accès, offre au moins un service d'accès à un réseau informatique de type Internet (10),
et **en ce que** ladite application de services exécutée par le terminal est un navigateur (31) permettant au terminal de naviguer au sein dudit réseau informatique de type Internet, après que ladite communication entre le terminal et ladite plate-forme d'accès a effectivement été établie.

4. Procédé selon la revendication 3, **caractérisé en ce que** ledit navigateur (31) utilise un langage spécifique du type "WAP/HDML".

5. Procédé selon l'une quelconque des revendications 3 et 4, **caractérisé en ce qu'**au moins une information, utile au navigateur (31) après qu'il a été lancé, est également stockée sur ledit module d'identification d'abonné (4).

6. Procédé selon la revendication 5, **caractérisé en ce que** ladite au moins une information, utile au navigateur après qu'il a été lancé, appartient au groupe comprenant :
- des numéros de type IP ;
- des clés secrètes d'authentification du navigateur et/ou de cryptage de données ;
- des identificateurs d'utilisateurs auprès des plateformes d'accès ;
- des numéros de centre de service de messages courts.

7. Procédé selon l'une quelconque des revendications 1 et 2, **caractérisé en ce que** ledit serveur de services (13) offre au moins un service de paiement et/ou de réservation et/ou de consultation.
et **en ce que** ladite application de services exécutée par le terminal est une application de paiement et/ou de réservation et/ou de consultation, permettant au terminal de bénéficier dudit au moins un service de paiement et/ou de réservation et/ou de consultation offert par ledit serveur de services, après que ladite communication entre le terminal et ledit serveur de services a effectivement été établie.

8. Procédé selon l'une quelconque des revendications 1 à 7, ledit module d'identification d'abonné (4) stockant au moins une "application opérateur" dont l'exécution permet d'offrir au moins une fonctionnalité à un utilisateur de ladite station mobile,
**caractérisé en ce que** ladite étape (21) d'envoi par le module d'identification d'abonné, au terminal, d'une commande d'établissement d'une communication entre le terminal et le premier serveur de services correspond à une fonctionnalité supplémentaire, dont le choix est offert à l'utilisateur lors de l'exécution par le module d'identification d'abonné de ladite application opérateur.

9. Procédé selon l'une quelconque des revendications 1 à 8, **caractérisé en ce que** ledit système de radiocommunication auquel appartient ladite station mobile appartient au groupe comprenant :
- les systèmes de radiocommunication de type GSM ;
- les systèmes de radiocommunication de type DCS 1800 ;
- les systèmes de radiocommunication de type PCS 1900 ;
- les systèmes de radiocommunication de type UMTS ;
- les systèmes de radiocommunication de type DECT.

10. Procédé selon l'une quelconque des revendications 1 à 9, **caractérisé en ce que** ladite commande d'établissement d'une communication, envoyée par le module d'identification d'abonné au terminal, est la commande "SET UP CALL" du jeu de commandes du "SIM Application Toolkit".

11. Procédé selon l'une quelconque des revendications 1 à 10, **caractérisé en ce que** ladite liste prédéterminée de jeu d'un ou plusieurs paramètres est stockée sur ledit module d'identification d'abonné (4), chaque jeu d'un ou plusieurs paramètres comprenant un numéro de téléphone de serveur de services (n1, n2, n3, ...) et, éventuellement, au moins un paramètre d'appel (p1, p2, p3, ...),
et **en ce que** ledit procédé comprend en outre l'étape suivante, préalable à ladite étape de comparaison :
- le terminal lit (20) ladite liste prédéterminée de jeu d'un ou plusieurs paramètres, stockée sur ledit module d'identification d'abonné.

12. Procédé selon la revendication 11, **caractérisé en ce que** ladite étape (20) de lecture, par le terminal, de ladite liste prédéterminée de jeu d'un ou plusieurs paramètres est exécutée lors d'au moins certaines initialisations dudit terminal.

13. Procédé selon l'une quelconque des revendications 1 à 12, **caractérisé en ce que** si les conditions pour que le terminal lance l'exécution de ladite application de services ne sont pas remplies, ledit procédé comprend en outre les étapes complémentaires suivantes, pouvant éventuellement être réitérées :
- le module d'identification d'abonné envoie (28) au terminal, afin que le terminal l'exécute, une nouvelle commande d'établissement d'une communication entre le terminal et ledit premier serveur de services ou entre le terminal et un second serveur de services, distinct du premier serveur de services, ladite nouvelle commande étant paramétrée avec un nouveau jeu d'un ou plusieurs paramètres distinct dudit premier jeu paramètres
- le terminal compare (29) ledit nouveau jeu d'un ou plusieurs paramètres avec ladite liste prédéterminée d'un ou plusieurs jeux paramètres ;
- si (30) le résultat de ladite comparaison est positif, le terminal exécute ladite commande et tente (31) d'établir une communication avec ledit premier ou second serveur de services, selon ledit nouveau jeu d'un ou plusieurs paramètres ;
- si (32) ladite communication avec ledit premier ou second serveur de services est effectivement établie, le terminal lance (33) l'exécution de ladite application de services, de façon que ledit terminal puisse bénéficier services offerts par ledit premier ou second serveur de services.

14. Procédé selon la revendication 13, **caractérisé en ce que** ladite étape (28) d'envoi par le module d'identification d'abonné, au terminal, d'une nouvelle commande d'établissement d'une communication est effectuée automatiquement si, à l'issue d'une tentative précédente, les conditions pour que le terminal lance l'exécution de ladite application de services ne sont pas remplies.

15. Procédé selon la revendication 13 et la revendication 8, **caractérisé en ce que** ladite étape (28) d'envoi par le module d'identification d'abonné, au terminal, d'une nouvelle commande d'établissement d'une communication correspond à une fonctionnalité supplémentaire, dont le choix est offert à l'utilisateur lors de l'exécution par le module d'identification d'abonné de ladite application opérateur.

16. Procédé selon l'une quelconque des revendications 1 à 15, **caractérisé en ce que** ladite étape (26) de lancement par le terminal de l'exécution de ladite application de services est suivie d'une étape (27) d'authentification dudit module d'identification d'abonné (4) par ledit serveur de services, comprenant elle-même les étapes suivantes :
- le serveur de services envoie (41) un nombre aléatoire, dit challenge, au module d'identification d'abonné, via le terminal ;
- en fonction dudit challenge et à l'aide d'un algorithme d'authentification et/ou au moins une clé d'authentification contenu dans des zones protégées du module d'identification d'abonné, le module d'identification d'abonné calcule (42) une première signature électronique ;
- via le terminal, le module d'identification d'abonné envoie (43) ladite première signature électronique au serveur de services ;
- en fonction dudit challenge et à l'aide dudit algorithme d'authentification et/ou de ladite au moins une clé d'authentification, qu'il connaît également, ledit serveur de services calcule (44) une seconde signature électronique ;
- ledit serveur de services compare (45) lesdites première et seconde signatures électroniques, et si elles sont identiques, authentifie ledit module d'identification d'abonné.

17. Module d'identification d'abonné (4), du type destiné à coopérer avec un terminal (3) pour former une station mobile (2) comprise dans un système de radiocommunication, ledit terminal pouvant exécuter une application de services (31) de façon à bénéficier d'un ou plusieurs services offerts par un serveur de services (UP1, UP2, 13) après qu'une communication a été établie entre ledit terminal et ledit serveur de services,
**caractérisé en ce que** ledit module d'identification d'abonné comprend des moyens (52) d'envoi au terminal, afin que le terminal l'exécute, d'une commande d'établissement d'une communication entre le terminal et un premier serveur de services, ladite commande étant paramétrée avec un premier jeu d'un ou plusieurs paramètres comprenant un premier numéro de téléphone dudit premier serveur de services et, éventuellement, au moins un premier paramètre d'appel, le terminal effectuant les étapes suivantes à la réception de ladite commande :
- le terminal compare ledit premier jeu d'un ou plusieurs paramètres avec une liste prédéterminée d'un ou plusieurs jeux paramètres, comprenant au moins un jeu d'un ou plusieurs paramètre ;
- si ledit premier jeu d'un ou plusieurs paramètres fait partie de ladite liste, le terminal exécute ladite commande et tente d'établir une communication avec ledit premier serveur de services, selon ledit premier jeu paramètres d'un ou plusieurs ;
- si ladite communication avec ledit premier serveur est effectivement établie, le terminal lance l'exécution de ladite application de services, de façon que ledit terminal puisse bénéficier d'un ou plusieurs services offerts par ledit premier serveur de services.

18. Terminal (3), du type destiné à coopérer avec un module d'identification d'abonné (4) pour former une station mobile (2) comprise dans un système de radiocommunication, ledit terminal pouvant exécuter une application de services (31) de façon à bénéficier d'un ou plusieurs services offerts par un serveur de services (UP1, UP2, 13) après qu'une communication a été établie entre ledit terminal et ledit serveur de services,
**caractérisé en ce que** ledit terminal comprend :
- des moyens (32) de réception d'une commande, provenant du module d'identification d'abonné et demandant au terminal d'établir une communication entre le terminal et un premier serveur de services, ladite commande étant paramétrée avec un premier jeu d'un ou plusieurs paramètres comprenant un premier numéro de téléphone dudit premier serveur de services et, éventuellement, au moins un premier paramètre d'appel ;
- des moyens (33) de comparaison dudit premier jeu d'un ou plusieurs paramètres avec une liste prédéterminée d'un ou plusieurs jeux paramètres, comprenant au moins un jeu d'un ou plusieurs paramètres;
- des moyens (34) d'exécution de ladite commande, si ledit premier jeu d'un ou plusieurs paramètres fait partie de ladite liste, de façon à tenter d'établir une communication avec ledit premier serveur de services, selon ledit premier jeu d'un ou plusieurs paramètres;
- des moyens (35) de lancement de l'exécution de ladite application de services, si ladite communication entre le terminal et ledit premier serveur est effectivement établie, de façon que ledit terminal puisse bénéficier d'un ou plusieurs services offerts par ledit premier serveur de services.

## Claims

1. Process for access to a service server (UP1, UP2, 13) from a mobile station (2) forming part of a radio communication system (1), said mobile station comprising a terminal (3) cooperating with a subscriber identity module (4), said terminal being able to execute a service application to benefit from one or several services offered by said service server after a communication has been set up between said terminal and said service server,
**characterized in that** said process comprises the following steps:
- the subscriber identity module sends (21) a command to the terminal, to set up a communication between the terminal and a first service server (UP1), so that the terminal can execute it, said command having a first parameter set, comprising a first telephone number of said first service server, and possibly at least one first call parameter;
- the terminal compares (22) said first parameter set with a determined list of parameter sets including at least one parameter set;
- if (23) the first parameter set forms part of said list, the terminal executes said command and attempts (24) to set up a communication with said first service server, using said first parameter set;
- if (25) said communication with the first said first server is actually set up, the terminal starts execution (26) of said service application, such that said terminal can benefit from the service(s) offered by said first service server.

2. Process according to claim 1, **characterized in that** each distinct parameter set, which can set parameters for said communication set up command, comprises at least:
- a telephone number (n1, n2, n3) of a service server;
- a call parameter (p1, p2, p3) defining a communication mode.

3. Process according to either of claims 1 and 2, **characterized in that** said service server (UP1, UP2, called the access platform, offers at least one access service to an Internet type computer network (10),
and **in that** said service application executed by the terminal is a browser (31) enabling the terminal to browse through said Internet type network, after said communication between the terminal and said access platform has effectively been set up.

4. Process according to claim 3, **characterized in that** said browser (31) uses a specific language of the "WAP/HDML" type.

5. Process according to either of claims 3 and 4, **characterized in that** at least one item of information useful to the browser (31) after it has been started, is also stored on said subscriber identity module (4).

6. Process according to claim 5, **characterized in that** said at least one item of information useful to the browser after it has been started belongs to the group comprising:
- IP type numbers;
- secret browser authentication keys and/or data encryption keys;
- user identifiers with access platforms;
- numbers of the short messages service center.

7. Process according to either of claims 1 and 2, **characterized in that** said service server (13) offers at least one payment and/or booking and/or viewing service,
and **in that** said service application executed by the terminal is a payment and/or booking and/or viewing application, enabling the terminal to benefit from said at least one payment and/or booking and/or viewing service offered by the service server, after said communication between the terminal and said service server has effectively been set up.

8. Process according to any one of claims 1 to 7, said subscriber identity module (4) storing at least one "operator application", the execution of which offers at least one function to a user of said mobile station,
**characterized in that** said step (21) in which the subscriber identity module sends a command to set up a communication between the terminal and the first service server corresponds to an additional function, which is offered to the user as a choice when the subscriber identity module executes said operator application.

9. Process according to any one of claims 1 to 8, **characterized in that** said radio communication system to which said mobile station belongs, belongs to the group comprising:
- GSM type radio communication systems;
- DCS 1800 type radio communication systems;
- PCS 1900 type radio communication systems
- UMTS type radio communication systems
- DECT type radio communication systems.

10. Process according to any one of claims 1 to 9, **characterized in that** said command for setting up a communication sent by the subscriber identity module to the terminal is the "SET UP CALL" command in the "SIM Application Toolkit" command set.

11. Process according to any one of claims 1 to 10, **characterized in that** said predetermined list of parameter sets is stored on said subscriber identity module (4), each parameter set comprising a service server telephone number (n1, n2, n3, ...) and possibly one or more call parameters (p1, p2, p3, ...),
and **in that** said process also comprises the following step prior to said comparison step:
- the terminal reads (20) said predetermined list of parameter sets stored on said subscriber identity module.

12. Process according to claim 11, **characterized in that** said step (20) in which the terminal reads said predetermined list of parameter sets is executed at least some of the times that said terminal is initialized.

13. Process according to any one of claims 1 to 12, **characterized in that** if the conditions for the terminal to start execution of said service application are not satisfied, said process also comprises the following additional steps which may be reiterated:
- the subscriber identity module sends (28) a new command to set up a communication between the terminal and said first service server or between the terminal and a second service server distinct from the first service server to the terminal, so that the terminal can execute it, said new command being accompanied by a new set of parameters distinct from the first set of parameters;
- the terminal compares (29) said new parameter set with said predetermined list of parameter sets;
- if (30) the result of said comparison is positive, the terminal executes said command and attempts (31) to set up a communication with said first or second service server, according to the new parameter set;
- if (32) said communication with said first or second service server is actually set up, the terminal starts (33) execution of said service application, so that said terminal can benefit from the service(s) offered by said first or second service server.

14. Process according to claim 13, **characterized in that** said step (28) in which the subscriber identity module sends a new command to the terminal to set up a communication is carried out automatically, if the conditions for the terminal to start execution of said service application are not satisfied at the end of a previous attempt.

15. Process according to claim 13 and claim 8, **characterized in that** said step (28) in which the subscriber identity module sends a new command to the terminal to set up a communication corresponds to an additional function, the choice of which is offered to the user when the subscriber identity module executes said operator application.

16. Process according to any one of claims 1 to 15, **characterized in that** said step (26) in which the terminal executes said service application is followed by a step (27) in which said service server authenticates said subscriber identity module (4), itself including the following steps:
- the service server (41) sends a random number, called the challenge, to the Subscriber identity module through the terminal;
- depending on said challenge, and using an authentication algorithm and/or at least one authentication key contained in protected areas of the subscriber identity module, the subscriber identity module calculates (42) a first electronic signature;
- the subscriber identity module sends (43) said first electronic signature to the service server, through the terminal;
- said service server calculates (44) a second electronic signature, depending on said challenge and making use of said authentication algorithm and/or said at least one authentication key that it also knows;
- said service server compares (45) said first and second electronic signatures, and if they are identical, authenticates said subscriber identity module.

17. Subscriber Identity Module (4) of the type designed to cooperate with a terminal (3) to form a mobile station (2) within a radio communication system, said terminal being able to execute a service application (31) in order to benefit from one or several services offered by a service server (UP1, UP2, 13) after a communication has been set up between said terminal and said service server,
**characterized in that** said subscriber identity module comprises means (52) of sending a command to set up a communication between the terminal and a first service server, so that the terminal can execute it, said command including a first parameter set comprising a first telephone number of said first service server, and possibly at least one first call parameter, the terminal carrying out the following steps on reception of said command:
- the terminal compares said first parameter set with a predetermined list of parameter sets, containing at least one parameter set;
- if said first parameter set forms part of said list, the terminal executes said command and attempts to set up a communication with said first service server using said first parameter set;
- if said communication with said first server is actually set up, the terminal starts execution of said service application so that said terminal can benefit from the service(s) offered by said first service server.

18. Terminal (3) of the type designed to cooperate with a subscriber identity module (4) to form a mobile station (2) within a radio communication system, said terminal being able to execute a service application (31) so as to benefit from one or several services offered by a service server (UP1, UP2, 13) after a communication has been set up between said terminal and said service server,
**characterized in that** said terminal comprises:
- means (32) of reception of a command originating from the subscriber identity module and requesting the terminal to set up a communication between the terminal and a first service server, said command being accompanied by a first parameter set comprising a first telephone number of said first service server and possibly at least one first call parameter;
- means (33) of comparing said first parameter set with a predetermined list of parameter sets, comprising at least one parameter set;
- means (34) of executing said command, if said first parameter set is included in said list, in order to set up a communication with said first service server, according to said first parameter set;
- means (35) of starting execution of said service application, if said communication between the terminal and said first server is actually set up, such that said terminal can benefit from the service(s) offered by said first service server.

## Patentansprüche

1. Verfahren zum Zugriff auf einen Diensteserver (UP1, UP2, 13) ausgehend von einer Mobilstation (2), die in einem Funkkommunikationssystem (1) enthalten ist, wobei die Mobilstation ein Endgerät (3) umfasst, das mit einem Teilnehmeridentifikationsmodul (4) zusammenwirkt, wobei das Endgerät eine Diensteanwendung ausführen kann, um einen oder mehrere Dienste zu nutzen, die durch den Diensteserver angeboten werden, nachdem eine Verbindung zwischen dem Endgerät und dem Diensteserver hergestellt wurde,
**dadurch gekennzeichnet, dass** das Verfahren die folgenden Schritte umfasst:
- das Teilnehmeridentifikationsmodul sendet (21) dem Endgerät einen Befehl zur Herstellung einer Verbindung zwischen dem Endgerät und einem ersten Diensteserver (UP1), damit das Endgerät ihn ausführt, wobei der Befehl mit einem ersten Satz von einem oder mehreren Parametern parametrisiert ist, der eine erste Telefonnummer des ersten Diensteservers und möglicherweise mindestens einen ersten Anrufparameter umfasst;
- das Endgerät vergleicht (22) den ersten Satz von einem oder mehreren Parametern mit einer vorbestimmten Liste von einem oder mehreren Sätzen von einem oder mehreren Parametern, die mindestens einen Satz von einem oder mehreren Parametern umfasst;
- wenn (23) der erste Satz von einem oder mehreren Parametern Bestandteil der Liste ist, führt das Endgerät den Befehl aus und versucht (24), gemäß dem ersten Satz von einem oder mehreren Parametern eine Verbindung mit dem ersten Diensteserver herzustellen;
- wenn (25) die Verbindung mit dem ersten Server tatsächlich hergestellt ist, startet (26) das Endgerät die Ausführung der Diensteanwendung, derart, dass das Endgerät einen oder mehrere Dienste nutzen kann, die durch den ersten Diensteserver angeboten werden.

2. Verfahren nach Anspruch 1, **dadurch gekennzeichnet, dass** jeder unterschiedliche Satz von einem oder mehreren Parametern, der das Parametrisieren des Befehls zur Herstellung einer Verbindung ermöglicht, zumindest Folgendes umfasst:
- eine Telefonnummer (n1, n2, n3, ...) eines Diensteservers;
- einen Anrufparameter (p1, p2, p3, ...), der einen Verbindungsmodus bestimmt.

3. Verfahren nach einem der Ansprüche 1 und 2, **dadurch gekennzeichnet, dass** der Diensteserver (UP1, UP2), Zugriffsplattform genannt, mindestens einen Zugriffsdienst auf ein Rechnernetz vom Typ Internet (10) anbietet,
und dass die Diensteanwendung, die durch das Endgerät ausgeführt wird, ein Browser (31) ist, der es dem Endgerät ermöglicht, im Rechnernetz vom Typ Internet zu surfen, nachdem die Verbindung zwischen dem Endgerät und der Zugriffsplattform tatsächlich hergestellt wurde.

4. Verfahren nach Anspruch 3, **dadurch gekennzeichnet, dass** der Browser (31) eine spezifische Sprache des Typs "WAP/HDML" verwendet.

5. Verfahren nach einem der Ansprüche 3 und 4, **dadurch gekennzeichnet, dass** mindestens eine Information, die für den Browser (31) nützlich ist, nachdem er gestartet wurde, auch auf dem Teilnehmeridentifikationsmodul (4) gespeichert wird.

6. Verfahren nach Anspruch 5, **dadurch gekennzeichnet, dass** die mindestens eine Information, die für den Browser nützlich ist, nachdem er gestartet wurde, zur Gruppe gehört, die Folgendes umfasst:
- Nummern vom Typ IP;
- geheime Schlüssel zur Authentifizierung des Browsers und/oder zur Verschlüsselung von Daten;
- Identifizierer von Benutzern bei Zugriffsplattformen;
- Nummern von Kurznachrichten-Dienstzentren.

7. Verfahren nach einem der Ansprüche 1 und 2, **dadurch gekennzeichnet, dass** der Diensteserver (13) mindestens einen Bezahl- und/oder Buchungs- und/oder Abfragedienst bietet,
und **dadurch**, dass die durch das Endgerät ausgeführte Diensteanwendung eine Bezahl- und/oder Buchungs- und/oder Abfrageanwendung ist, die es dem Endgerät ermöglicht, den mindestens einen Bezahl- und/oder Buchungs- und/oder Abfragedienst, der durch den Diensteserver angeboten wird, zu nutzen, nachdem die Verbindung zwischen dem Endgerät und dem Diensteserver tatsächlich hergestellt wurde.

8. Verfahren nach einem der Ansprüche 1 bis 7, wobei das Teilnehmeridentifikationsmodul (4) mindestens eine "Dienstanbieteranwendung" speichert, deren Ausführung es ermöglicht, einem Benutzer der Mobilstation mindestens eine Funktionalität anzubieten,
**dadurch gekennzeichnet, dass** der Schritt (21) des Sendens eines Befehls zur Herstellung einer Verbindung zwischen dem Endgerät und dem ersten Diensteserver durch das Teilnehmeridentifikationsmodul an das Endgerät einer zusätzlichen Funktionalität entspricht, deren Auswahl dem Benutzer bei der Ausführung der Dienstanbieteranwendung durch das Teilnehmeridentifikationsmodul angeboten wird.

9. Verfahren nach einem der Ansprüche 1 bis 8, **dadurch gekennzeichnet, dass** das Funkkommunikationssystem, zu dem die Mobilstation gehört, zur Gruppe gehört, die Folgendes umfasst:
- Funkkommunikationssysteme des Typs GSM;
- Funkkommunikationssysteme des Typs DCS 1800;
- Funkkommunikationssysteme des Typs PCS 1900;
- Funkkommunikationssysteme des Typs UMTS;
- Funkkommunikationssysteme des Typs DECT.

10. Verfahren nach einem der Ansprüche 1 bis 9, **dadurch gekennzeichnet, dass** der Befehl zur Herstellung einer Verbindung, der durch das Teilnehmeridentifikationsmodul an das Endgerät gesendet wird, der Befehl "SET UP CALL" des Befehlssatzes des "SIM Application Toolkit" ist.

11. Verfahren nach einem der Ansprüche 1 bis 10, **dadurch gekennzeichnet, dass** die vorbestimmte Liste von Sätzen von einem oder mehreren Parametern auf dem Teilnehmeridentifikationsmodul (4) gespeichert ist, wobei jeder Satz von einem oder mehreren Parametern eine Diensteserver-Telefonnummer (n1, n2, n3, ...) und möglicherweise mindestens einen Anrufparameter (p1, p2, p3, ...) umfasst,
und **dadurch**, dass das Verfahren des Weiteren den folgenden, dem Vergleichsschritt vorangehenden Schritt umfasst:
- das Endgerät liest (20) die vorbestimmte Liste von Sätzen von einem oder mehreren Parametern, die im Teilnehmeridentifikationsmodul gespeichert ist.

12. Verfahren nach Anspruch 11, **dadurch gekennzeichnet, dass** der Schritt (20) des Lesens der vorbestimmten Liste der Sätze von einem oder mehreren Parametern durch das Endgerät bei zumindest einigen Initialisierungen des Endgeräts ausgeführt wird.

13. Verfahren nach einem der Ansprüche 1 bis 12, **dadurch gekennzeichnet, dass** das Verfahren, wenn die Bedingungen für das Starten der Ausführung der Diensteanwendung durch das Endgerät nicht erfüllt sind, des Weiteren die folgenden zusätzlichen Schritte umfasst, wobei diese möglicherweise wiederholt werden können:
- das Teilnehmeridentifikationsmodul sendet (28) dem Endgerät einen neuen Befehl zur Herstellung einer Verbindung zwischen dem Endgerät und dem ersten Diensteserver oder zwischen dem Endgerät und einem zweiten Diensteserver, der sich vom ersten Diensteserver unterscheidet, damit das Endgerät ihn ausführt, wobei der neue Befehl mit einem neuen Satz von einem oder mehreren Parametern parametrisiert ist, der sich vom ersten Satz von einem oder mehreren Parametern unterscheidet;
- das Endgerät vergleicht (29) den neuen Satz von einem oder mehreren Parametern mit der vorbestimmten Liste von einem oder mehreren Sätzen von einem oder mehreren Parametern;
- wenn (30) das Ergebnis des Vergleichs positiv ist, führt das Endgerät den Befehl aus und versucht (31), gemäß dem neuen Satz von einem oder mehreren Parametern eine Verbindung mit dem ersten oder zweiten Diensteserver herzustellen;
- wenn (32) die Verbindung mit dem ersten oder zweiten Diensteserver tatsächlich hergestellt ist, startet das Endgerät (33) die Ausführung der Diensteanwendung, derart, dass das Endgerät die einen oder mehreren Dienste, die durch den ersten oder zweiten Diensteserver angeboten werden, nutzen kann.

14. Verfahren nach Anspruch 13, **dadurch gekennzeichnet, dass** der Schritt (28) des Sendens eines neuen Befehls zur Herstellung einer Verbindung durch das Teilnehmeridentifikationsmodul an das Endgerät automatisch ausgeführt wird, wenn nach Abschluss eines vorhergehenden Versuchs die Bedingungen dafür, dass das Endgerät die Ausführung der Diensteanwendung startet, nicht erfüllt sind.

15. Verfahren nach Anspruch 13 und Anspruch 8, **dadurch gekennzeichnet, dass** der Schritt (28) des Sendens eines neuen Befehls zur Herstellung einer Verbindung durch das Teilnehmeridentifikationsmodul an das Endgerät einer zusätzlichen Funktionalität entspricht, deren Auswahl dem Benutzer bei der Ausführung der Dienstanbieteranwendung durch das Teilnehmeridentifikationsmodul angeboten wird.

16. Verfahren nach einem der Ansprüche 1 bis 15, **dadurch gekennzeichnet, dass** dem Schritt (26) des Startens der Ausführung der Diensteanwendung durch das Endgerät ein Schritt (27) der Authentifizierung des Teilnehmeridentifikationsmoduls (4) durch den Diensteserver folgt, der wiederum die folgenden Schritte umfasst:
- der Diensteserver sendet (41) dem Teilnehmeridentifikationsmodul über das Endgerät eine Zufallszahl, Challenge genannt;
- als Funktion des Challenges und mittels eines Authentifizierungsalgorithmus und/oder zumindest eines Authentifizierungsschlüssels, der in den geschützten Bereichen des Teilnehmeridentifikationsmoduls enthalten ist, berechnet (42) das Teilnehmeridentifikationsmodul eine erste elektronische Signatur;
- das Teilnehmeridentifikationsmodul sendet (43) die erste elektronische Signatur über das Endgerät an den Diensteserver;
- als Funktion des Challenges und mittels des Authentifizierungsalgorithmus und/oder des mindestens einen Authentifizierungsschlüssels, den er gleichfalls kennt, berechnet (44) der Diensteserver eine zweite elektronische Signatur;
- der Diensteserver vergleicht (45) die erste und zweite elektronische Signatur und authentifiziert, wenn sie identisch sind, das Teilnehmeridentifikationsmodul.

17. Teilnehmeridentifikationsmodul (4) des Typs, der dazu bestimmt ist, mit einem Endgerät (3) zusammenzuwirken, um eine Mobilstation (2) zu bilden, die in einem Funkkommunikationssystem enthalten ist, wobei das Endgerät eine Diensteanwendung (31) ausführen kann, um einen oder mehrere Dienste zu nutzen, die durch einen Diensteserver (UP1, UP2, 13) angeboten werden, nachdem eine Verbindung zwischen dem Endgerät und dem Diensteserver hergestellt wurde,
**dadurch gekennzeichnet, dass** das Teilnehmeridentifikationsmodul Mittel (52) zum Senden eines Befehls zur Herstellung einer Verbindung zwischen dem Endgerät und einem ersten Diensteserver an das Endgerät umfasst, damit das Endgerät ihn ausführt, wobei der Befehl mit einem ersten Satz von einem oder mehreren Parametern parametrisiert ist, der eine erste Telefonnummer des ersten Diensteservers und möglicherweise mindestens einen ersten Anrufparameter umfasst, wobei das Endgerät beim Empfang des Befehls die folgenden Schritte ausführt:
- das Endgerät vergleicht den ersten Satz von einem oder mehreren Parametern mit einer vorbestimmten Liste von einem oder mehreren Sätzen von einem oder mehreren Parametern, die mindestens einen Satz von einem oder mehreren Parametern umfasst;
- wenn der erste Satz von einem oder mehreren Parametern Bestandteil der Liste ist, führt das Endgerät den Befehl aus und versucht, gemäß dem ersten Satz von einem oder mehreren Parametern eine Verbindung mit dem ersten Diensteserver herzustellen;
- wenn die Verbindung mit dem ersten Server tatsächlich hergestellt ist, startet das Endgerät die Ausführung der Diensteanwendung, derart, dass das Endgerät einen oder mehrere Dienste nutzen kann, die durch den ersten Diensteserver angeboten werden.

18. Endgerät (3) vom Typ, der dazu bestimmt ist, mit einem Teilnehmeridentifikationsmodul (4) zusammenzuwirken, um eine Mobilstation (2) zu bilden, die in einem Funkkommunikationssystem enthalten ist, wobei das Endgerät eine Diensteanwendung (31) ausführen kann, um einen oder mehrere Dienste zu nutzen, die von einem Diensteserver (UP1, UP2, 13) angeboten werden, nachdem eine Verbindung zwischen dem Endgerät und dem Diensteserver hergestellt wurde,
**dadurch gekennzeichnet, dass** das Endgerät Folgendes umfasst:
- Mittel (32) zum Empfang eines Befehls, der vom Teilnehmeridentifikationsmodul kommt und das Endgerät auffordert, eine Verbindung zwischen dem Endgerät und einem ersten Diensteserver herzustellen, wobei der Befehl mit einem ersten Satz von einem oder mehreren Parametern parametrisiert ist, der eine erste Telefonnummer des ersten Diensteservers und möglicherweise mindestens einen ersten Anrufparameter umfasst;
- Mittel (33) zum Vergleichen des ersten Satzes von einem oder mehreren Parametern mit einer vorbestimmten Liste von einem oder mehreren Sätzen von einem oder mehreren Parametern, die mindestens einen Satz von einem oder mehreren Parametern umfasst;
- Mittel (34) zum Ausführen des Befehls, wenn der erste Satz von einem oder mehreren Parametern Bestandteil der Liste ist, derart, dass das Herstellen einer Verbindung mit dem ersten Diensteserver gemäß dem ersten Satz von einem oder mehreren Parametern versucht wird;
- Mittel (35) zum Starten der Ausführung der Diensteanwendung, wenn die Verbindung zwischen dem Endgerät und dem ersten Server tatsächlich hergestellt ist, derart, dass das Endgerät einen oder mehrere Dienste nutzen kann, die durch den ersten Diensteserver angeboten werden.
